# DEMANDE DE BREVET EUROPEEN

(11) **EP 1 134 568 A1**
(43) Date de publication de la demande: **19.09.2001**
(21) Numéro de dépôt: 00870047.8
(22) Date de dépôt: 17.03.2000
(51) Int. Cl.: G01L 5/13

(54) **Suspension de moteur pour banc d'essais**

(71) Demandeur: Techspace Aero S.A., 4041 Herstal (BE)
(72) Inventeur: Malbrouck, Robert, 4432 Alleur (BE); Guillet, Gérard, 4683 Vivegnis (BE); Meijnen, Vincent, 4520 Longpre (Wanze) (BE)
(74) Mandataire: Van Malderen, Joelle

(57) **Abrégé**

La présente invention se rapporte à un dispositif de suspension (2) pour moteur sur banc d'essais au sol, ce banc comprenant un châssis fixe (1) et une structure support moteur (3), ledit dispositif de suspension (2) effectuant la liaison entre le châssis fixe (1) du banc d'essais et la structure support moteur (3), caractérisé en ce qu'il comprend au moins un élément (20) présentant un comportement élastique et comportant au moins un bloc (21) réalisé en un matériau élastomérique.

## Description

### Objet de l'invention

La présente invention se rapporte à une suspension de moteur pour banc d'essais au sol.

### Etat de la technique

Les moteurs tels que les turbopropulseurs et les turboréacteurs doivent être soumis à une série de tests sur des bancs d'essais afin que l'on puisse vérifier leurs caractéristiques et leur comportement du point de vue tant mécanique qu'aérodynamique. Ces moteurs sont disposés et maintenus dans ces bancs d'essais à l'aide d'une structure support. Ces moteurs sont soumis à une série de tests et contrôles tels que rodage, vérification de la poussée, consommation, absence de vibrations, contrôle des pompes à carburant, du circuit d'air de démarrage, de la mise sous tension des bougies, de l'état des portes, des volets, des circuits de servitude et de sécurité, etc.

Lors du contrôle dudit moteur, on expose le moteur à des conditions d'utilisation qui sont telles qu'elles génèrent des vibrations. Il peut s'agir d'une part de vibrations propres au fonctionnement normal du moteur et à la structure support du moteur et d'autre part de vibrations ponctuelles dues à un incident tel que par exemple la rupture d'une aube du rotor de la soufflante ou le blocage rotorique causé par exemple par la détérioration d'un palier.

Afin d'éviter qu'il n'y ait un transfert des vibrations dudit moteur (risque de résonance) vers le châssis du banc d'essais, on a proposé des solutions qui sont basées soit sur la torsion d'éléments métalliques tels que des barres de torsion, soit sur la présence d'une structure support relativement déformable.

Or, on constate que les suspensions proposées seront différentes pour chaque type de moteur et qu'elles devront être adaptées en fonction du type particulier de moteur à tester.

En outre, ce type de solution présente les inconvénients suivants : encombrement important, et donc coût élevé pour la réalisation des suspensions, et surtout manque de modularité de ladite suspension qui entraînera l'obligation d'interfaces spécifiques.

### Buts de l'invention

La présente invention vise à proposer un dispositif de suspension qui permet de dissocier les vibrations propres à la structure support du moteur des fréquences couvertes par l'excitation du moteur en fonctionnement. Ceci doit pouvoir être valable tant en fonctionnement normal qu'en fonctionnement incidentiel.

La présente invention vise en outre à proposer une solution qui permet de ménager les efforts supportés par les fixations du moteur à ladite structure support moteur.

Enfin, la présente invention vise à proposer une solution qui présente une modularité accrue et qui permet de ce fait de s'adapter à tout type particulier de moteur étudié sur banc d'essais.

### Résumé de l'invention

Habituellement, les suspensions pour moteur sur banc d'essais sont des suspensions auxquelles le moteur est directement accroché. La présente invention vise à proposer une solution qui comprend un ensemble d'éléments présentant un comportement élastique qui permettent d'assurer la liaison entre la structure support moteur et le châssis d'accrochage de la structure fixe du banc d'essais.

Avantageusement, au moins un desdits éléments comporte un matériau élastomérique tel qu'un caoutchouc naturel ou synthétique. Cet élastomère peut être un élastomère réticulé ou non, chargé ou non.

De manière particulièrement avantageuse, on pourra proposer une solution d'une suspension se présentant sous forme de plusieurs modules, chaque module comprenant un ensemble d'éléments présentant un comportement élastique qui permettent d'assurer la liaison entre la structure support moteur et le châssis d'accrochage de la structure fixe du banc d'essais et dans lequel au moins un des éléments comprend un matériau élastomérique.

Ceci permettra d'obtenir une flexibilité plus grande du système en jouant éventuellement sur le nombre de modules par suspension tout en permettant un plus faible encombrement et un plus faible coût de réalisation que les solutions proposées selon l'état de la technique.

Le fait de proposer une suspension modulaire permet d'adapter ladite suspension en fonction du type de moteur testé.

Le fait de proposer une suspension modulaire permet également d'adapter ladite suspension à l'effort maximum auquel doit résister ladite suspension (par exemple 80 tonnes, qui est l'effort correspondant à une rupture d'une aube pour un turboréacteur classique).

De manière particulièrement avantageuse, l'élément présentant le comportement élastique est constitué d'un matériau élastomérique se présentant sous la forme d'un bloc, de préférence cylindrique, qui peut par exemple avoir la forme d'une douille. Cet élément est disposé autour d'une buselure et enfermé dans un carcan métallique pour protéger ledit bloc. Ladite buselure est ensuite emmanchée sur deux axes ou arbres indépendants.

Chacun des axes ou arbres sera solidaire d'un élément qui permet la fixation au châssis fixe du banc d'essais tandis que ledit bloc en matériau élastomérique est solidaire de deux demi-éléments qui seront fixés à la structure support moteur.

De manière particulièrement avantageuse, le matériau élastomérique du bloc est précontraint avant qu'il ne soit enfermé dans le carcan métallique qui le recouvre. On observe ainsi que ce type de suspension pourra résister à des efforts tant transversaux que longitudinaux et même verticaux.

La solution selon la présente invention permet avantageusement de ménager en outre les fixations dudit moteur au châssis support moteur.

De manière particulièrement avantageuse, on peut utiliser les dispositifs de suspension tels que décrits précédemment pour des essais au sol de turboréacteurs ou de turbopropulseurs.

### Brève description des dessins

La figure 1 représente une vue schématique d'un banc d'essais sur lequel un moteur tel qu'un turboréacteur est contrôlé.

La figure 2 représente une vue en coupe d'un élément constitutif d'une suspension selon la présente invention.

Les figures 3a et 3b représentent des ensembles de plusieurs modules constituant une suspension selon la présente invention.

### Description d'une forme d'exécution préférée de l'invention

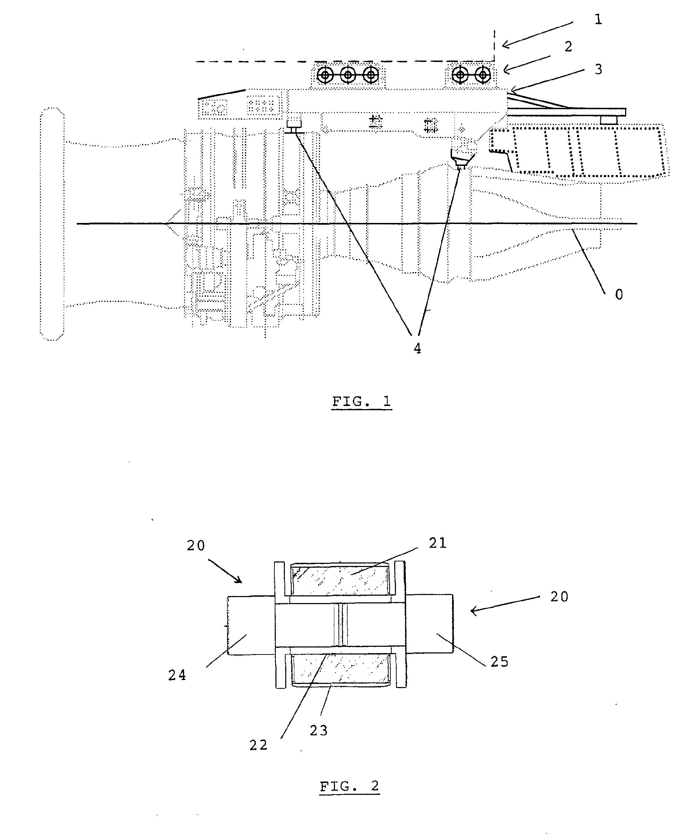

La figure 1 représente une partie du banc d'essais qui correspond essentiellement à une structure 3 qui est la structure support du moteur à tester tandis que le châssis fixe 1 du banc d'essais lui-même n'est représenté que schématiquement.

Cette structure support moteur 3 doit être déformable et pouvoir encaisser les chocs éventuels, en particulier dans le cas d'un comportement incidentiel. Par exemple, cette structure doit pouvoir encaisser l'effort produit par la rupture d'une aube du turboréacteur.

Le moteur à étudier, par exemple un turboréacteur 0, est fixé sur la structure support moteur 3 et y est maintenu par des attaches 4.

La présente invention vise à proposer comme dispositif de liaison entre la structure support moteur 3 et le châssis du banc d'essais, une suspension modulaire 2.

Grâce à ce type de suspension, les vibrations propres du moteur et de la structure support moteur 3 seront dissociées et pas transmises au banc d'essais, ceci tant en comportement normal qu'en comportement incidentiel (tel que la rupture d'une aube du rotor de la soufflante ou un blocage rotorique).

En outre, celle solution permet de ménager de manière particulièrement avantageuse les attaches 4 du moteur 0 à la structure support moteur 3.

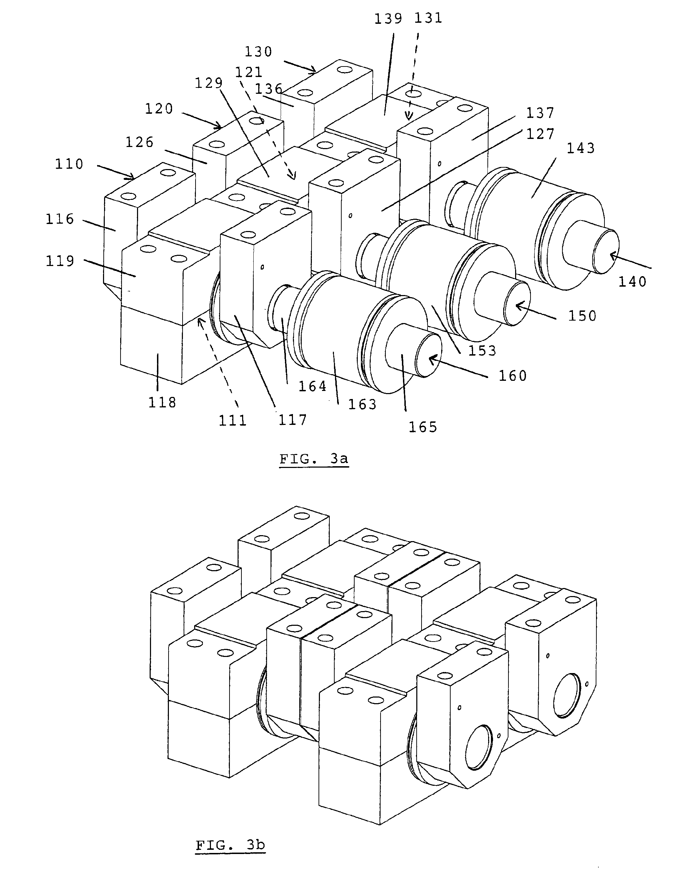

La figure 2 représente une vue en coupe d'un élément constitutif d'une telle suspension.

Avantageusement, cet élément 20 présente un comportement élastique et comprend un bloc élastomérique 21, de préférence de forme cylindrique et présentant plus particulièrement la forme d'une douille. Cet élément est creusé en son centre et est disposé autour d'une buselure 22 et enfermé dans un carcan métallique 23 qui permet de protéger ledit bloc élastomérique 21 d'un environnement parfois agressif.

Ladite buselure 22 est ensuite emmanchée sur deux axes indépendants 24 et 25.

Les figures 3 représentent un ensemble de plusieurs modules constituant une suspension selon la présente invention. La figure 3a représente une suspension à six modules tandis que la figure 3b représente une suspension à quatre modules.

A la figure 3a, trois modules 110, 120 et 130 sont représentés de manière complète tandis que pour les trois modules 140, 150 et 160, on n'a représenté que l'élément assurant la fonction élastique qui est le bloc en matériau élastomérique recouvert de sa carapace 143, 153 et 163. Chacun de ces éléments est constitué comme représenté à la figure 2.

Afin de permettre la fixation de ladite suspension d'une part au châssis fixe du banc d'essais et d'autre part à la structure support moteur, on a prévu, comme représenté pour les modules 110, 120 et 130, un élément de fixation 116, 126, 136, ... ou 117, 127, 137, ..., qui s'emboîte sur chaque axe ou arbre (non visibles) de l'élément assurant la fonction élastique 111, 121 et 131 (non visibles). Il s'agit d'une solidarisation totale sans aucun degré de liberté de mouvement des axes.

D'autre part, l'élément assurant la fonction élastique constitué par le bloc en matériau élastomérique 11, 12, 13 (non visibles) est lui-même emprisonné par deux demi-éléments de fixation 118 et 119, 128 et 129, 138 et 139, ....

A la figure 3b, les quatre modules ont été représentés de manière complète.

## Revendications

1. Dispositif de suspension (2) pour moteur sur banc d'essais au sol, ce banc comprenant un châssis fixe (1) et une structure support moteur (3), ledit dispositif de suspension (2) effectuant la liaison entre le châssis fixe (1) du banc d'essais et la structure support moteur (3), **caractérisé en ce qu'**il comprend au moins un élément (20) présentant un comportement élastique et comportant au moins un bloc (21) réalisé en un matériau élastomérique.

2. Dispositif de suspension (2) pour moteur sur banc d'essais au sol, ce banc comprenant un châssis fixe (1) et une structure support moteur (3), ledit dispositif se suspension (2) effectuant la liaison entre le châssis fixe (1) du banc d'essais et la structure support moteur (3), **caractérisé en ce qu'**il comprend un ensemble de plusieurs modules (110, 120, 130, ...), chaque module comprenant au moins un élément présentant un comportement élastique et comportant lui-même un bloc (111, 121, 131, ...) réalisé en un matériau élastomérique.

3. Dispositif de suspension selon la revendication 1 ou 2, **caractérisé en ce que** le matériau élastomérique est un matériau élastomérique réticulé ou non, chargé ou non.

4. Dispositif de suspension selon l'une quelconque des revendications précédentes, **caractérisé en ce que** l'élément présentant le bloc (21, 111, 121, 131, ...) réalisé en un matériau élastomérique est de préférence cylindrique et creusé en son centre.

5. Dispositif de suspension selon la revendication 4, **caractérisé en ce que** le bloc (21, 111, 121, 131, ...) réalisé en un matériau élastomérique est disposé autour d'une buselure (22, 112, 122, 132, ...) et est enfermé dans un carcan métallique (23, 113, 123, 133, ...) qui protège ledit bloc (21, 111, 121, 131, ...), ladite buselure (22, 112, 122, 132, ...) étant emmanchée sur deux axes (24 et 25, 114 et 115, 124 et 125, 134 et 135, ...) indépendants.

6. Dispositif de suspension selon l'une quelconque des revendications précédentes, **caractérisé en ce que** le matériau élastomérique du bloc (21, 111, 121, 131, ...) est précontraint.

7. Dispositif de suspension selon la revendication 4 ou 5, **caractérisé en ce que** chacun des deux axes indépendants (24 et 25, 114 et 115, 124 et 125, 134 et 135, ...) est solidaire d'un élément de fixation (116 et 117, 126 et 127, 136 et 137, ...) destiné à être fixé au châssis fixe (1) du banc d'essais tandis que le bloc (21, 111, 121, 131, ...) réalisé en un matériau élastomérique sera solidaire de deux demi-éléments (118 et 119, 128 et 129, 138 et 139, ...) de fixation qui sont destinés à être fixés à la structure support moteur (3).

8. Utilisation d'un dispositif de suspension selon l'une quelconque des revendications précédentes pour les essais au sol de turboréacteurs ou turbopropulseurs.
